# EUROPEAN PATENT SPECIFICATION

(11) **EP 3 569 911 B1**
(45) Date of publication and mention of the grant of the patent: **23.06.2021**
(21) Application number: 18172628.2
(22) Date of filing: 16.05.2018
(51) Int. Cl.: F16L 37/56, F16L 37/18

(54) **HYDRAULIC AND/OR PNEUMATIC COUPLING, IN PARTICULAR OF THE MULTIPLE CONNECTION TYPE**
HYDRAULISCHE UND/ODER PNEUMATISCHE KUPPLUNG, INSBESONDERE MIT MEHRFACHVERBINDUNG
ACCOUPLEMENT HYDRAULIQUE ET/OU PNEUMATIQUE, EN PARTICULIER DU TYPE À CONNEXIONS MULTIPLES

(43) Date of publication of application: 20.11.2019
(73) Proprietor: FASTER S.r.l., 26027 Rivolta d'Adda (IT)
(72) Inventor: SORBI, Roberto, 26027 Rivolta d'Adda (IT); DANELLI, Alessandro, 24053 Brignano Gera d'Adda (IT)
(74) Representative: Torti, Carlo Maria Emilio

(56) References cited:
- EP-A1- 2 740 985
- WO-A1-2018/044977
- DE-U1-202010 014 532

## Description

### TECHNICAL FIELD

The present invention belongs to the field of couplings for hydrodynamic and/or pneumatic applications, in particular for hydraulic and/or pneumatic circuits and the like. In particular, the present invention relates to a coupling assembly for hydrodynamic and/or pneumatic applications of the type indicated above. In detail, the present invention relates to a coupling assembly of the multiple connection type, i.e. adapted to allow the simultaneous hydraulic connection and disconnection of a plurality of male type couplings respectively to and from a corresponding plurality of female type couplings. In more detail, the present invention relates to a solution adapted to guarantee the optimal hydraulic connection of all said male and/or female type couplings of the coupling assembly and to avert the hydraulic accidental disconnection of one or more of said male and female couplings.

### BACKGROUND ART

Quick couplings for reciprocally connecting hydraulic circuits by means of flexible and/or rigid pipes are known in prior art. For example, multiple connection type quick couplings are known in the farming sector for reciprocally connecting the hydraulic circuits of a main tractor and of a tool (e.g. of the front loader, but also of a towed tool or one fixed to the rear lifter) respectively, wherein the hydraulic connection and disconnection of the female and male couplings is performed by mechanically connecting and disconnecting a fixed part (fixed block) and a movable part (movable block) of the coupling assembly, respectively.

An example of a coupling assembly of the multiple connection type according to the prior art is shown in figures from 1 to 4.

As shown, the coupling assembly 100 comprises a movable part 300 intended to constitute the end part of the hydraulic circuit of a piece of equipment (e.g. a front loader), and a fixed part 200 intended to constitute the end part of the hydraulic circuit of a main operating machine (e.g. a farming tractor) and (possibly but not necessarily) to be fixed to said main operating machine.

Again as shown, the movable part 300 is equipped with a plurality of couplings 301 (of male type in the particular case shown, but coupling assemblies in which the movable part 300 is equipped with female type couplings are also known), wherein the fixed part 200 is equipped with a corresponding plurality of couplings 201 (of male or female type, according to the type of couplings of the movable part 300, either female or male, respectively).

Each of the couplings 201 and 301 is intended to constitute the end part of a pipe of the hydraulic circuits of the equipment and of the main operating machine, respectively.

The fixed part 200 is further provided with a lever 401 adapted to be switched by rotation in the two opposite directions of rotation indicated by the double arrow in figures from 1 to 4, wherein the rotation of the lever 401 translates into the rotation in the same direction of rotation of a pair of plates or cams P1 and P2, each of which defines a corresponding engaging groove G1 and G2. The movable part 300 is instead provided with a pair of pawls or pins N1, N2 (only one of which is shown in the figures).

The mechanical connection of the movable part 300 and of the fixed part 200, with consequent simultaneous hydraulic connection of the respective couplings 301 and 201, occurs as follows.

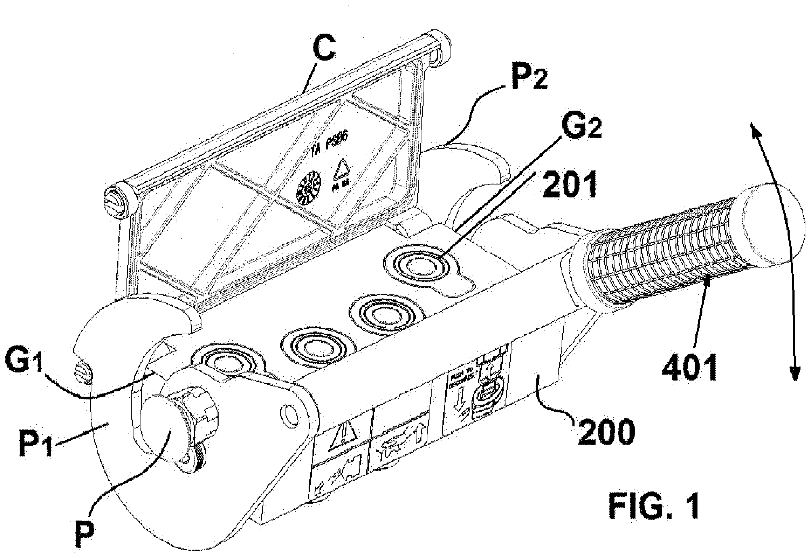

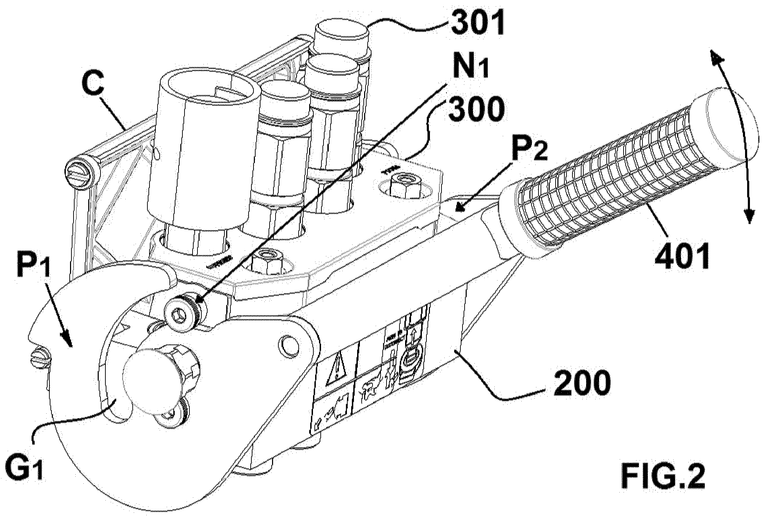

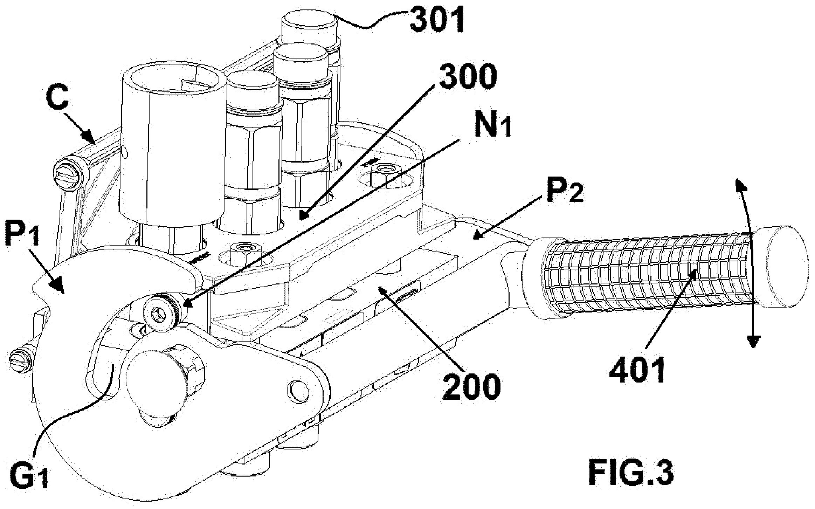

With the lever 401 and the plates or cams P1 and P2 in the position of figure 1 (first end stop position of the lever 401), the movable part 300 is approached to (in practice positioned frontally or in all cases made to correspond and/or mate with) the fixed part 200, wherein attention is paid to position each coupling 301 in correspondence of the respective coupling 201 (figure 2); this operation is facilitated by guide means (protruding pins and corresponding housings, not shown) respectively of the movable part 300 and of the fixed part 200, the reciprocal engaging of which translates into the correct positioning of the movable part 300 and of the fixed part 200. With the movable part 300 and fixed part 200 positioned as described above, the rotation of the lever 401 away from the first end stop position in figure 1 (and thus clockwise with respect to figures from 1 to 4), translates into the engagement of the pawls N1 and N2 by the engaging grooves G1 and G2 of the plates or cams P1 and P2, respectively.

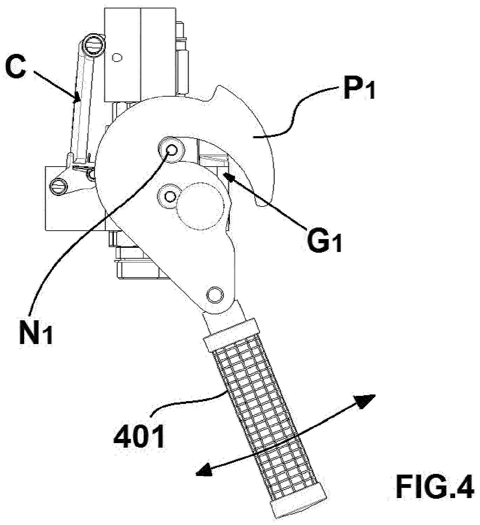

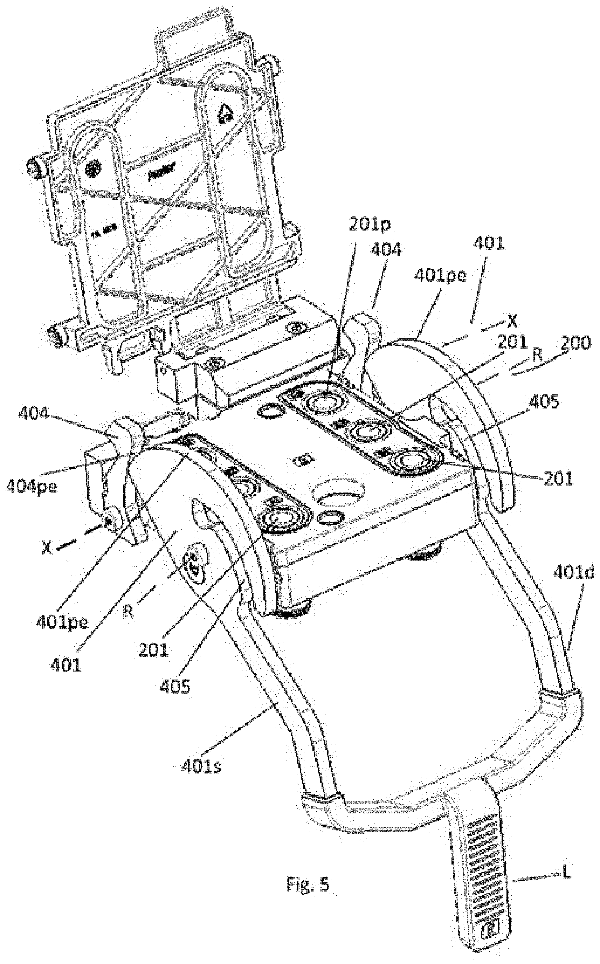

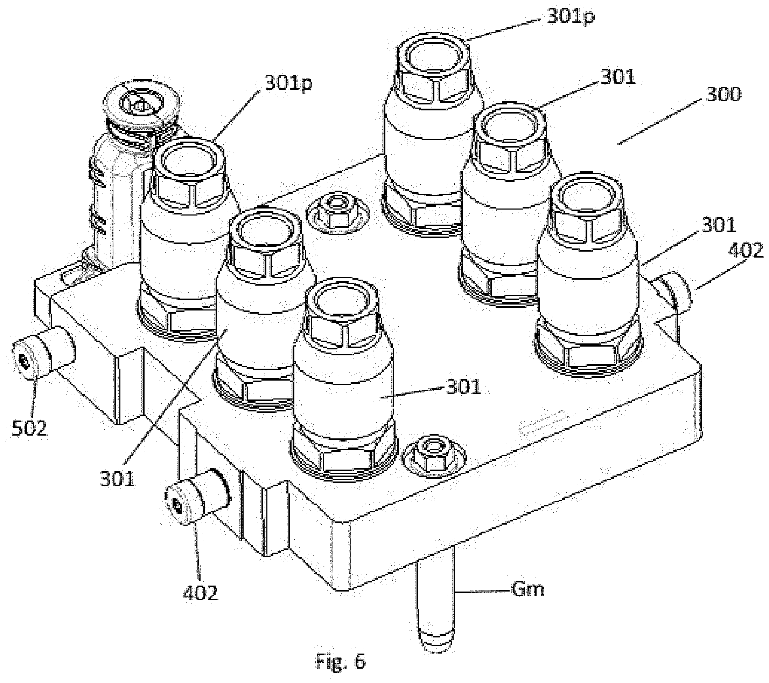

Therefore, as shown, the further rotation of the lever 401 further away from the first end stop position to the reaching of the second end stop position in figure 4, translates, by virtue of the conformation of the grooves G1 and G2, with an arc or cam extension each, into the definitive approach of the movable part 300 and of the fixed part 200 and into the consequent hydraulic connection of the couplings 301 and 201, wherein in the reciprocal position of figure 4, the movable part 300 and the fixed part 200 are mechanically constrained to each other.

Although appreciable from many different points of view, such as for example reliability, construction simplicity, versatility and substantially low cost, coupling assemblies according to the prior art of the type described above are not entirely free from drawbacks and/or disadvantages, that the applicant intends to overcome or at least minimize by means of the present invention.

A first drawback is related to the coupling assemblies in which the movable part 300 and the fixed part 200 comprise a plurality of couplings arranged (according to a plan view, e.g. from the top of the fixed part 200) along rows and columns, and thus substantially in a matrix. In these cases, constructive requirements may lead to choose solutions according to which at least some of the couplings are arranged along rows parallel to the rotation axis of the cams P1 and P2 but placed (again according to a plan view) at a non-negligible distance from said rotation axis. Substantially, considering the case of six couplings arranged on multiple rows parallel to the rotation axis with more of one coupling per row, only the couplings of the central row will be placed in a position substantially above the rotation axis, while on the contrary the other couplings, the peripheral ones, will be positioned, as anticipated, at a predefined distance from the rotation axis.

In these cases, during the mutual connection of the fixed part 200 and the movable part 300, the inevitable opposite resistance of the couplings to be connected translates into equally inevitable torsions and/or rotations of the movable part 300, with the risk that the mechanical constraint of the fixed part 200 and of the movable part 300 according to the methods summarized above translates into a partial (or even missing or not established) hydraulic connection of the peripheral couplings instead of an appropriate hydraulic connection.

Similarly, during use, the hydraulic pressure between the male and female peripheral couplings may induce undesired torsions and/or rotations of the movable part 300, with the risk of at least partial hydraulic disconnection of said peripheral couplings.

Further examples of coupling assemblies according to the closest prior art are known from EP 2740985.

### DESCRIPTION OF THE PRESENT INVENTION

It is the object of the present invention to overcome or at least minimize the drawbacks affecting the solutions according to the prior art, in particular the coupling assemblies of the multiple connection type.

In particular, it is an object or purpose of the present invention to achieve a solution such to guarantee that the mechanical constraint of the fixed and movable parts of a coupling assembly translates into an optimal and reliable hydraulic connection of all couplings, even of the most peripheral ones.

Furthermore, it is an object of the present invention to make available a solution which makes it possible to avert or at least minimize the risk of accidental hydraulic disconnection of the couplings.

In light of the drawbacks found in the solutions according to the prior art and of the objects summarized above, according to the present invention there is suggested a hydraulic and/or pneumatic coupling assembly according to claim 1, said assembly comprising a fixed block, adapted to be fixed to a main operating machine, and a movable block, said fixed block and said movable block comprising first mechanical constraining means which are adapted to be switched between a first position and a second position and second engaging and constraining means respectively, wherein the switching of said first mechanical constraining means from said first position to said second position and from said second position to said first position translates into a progressive engagement of said second engaging and constraining means and said first mechanical constraining means and thus into the mechanical constraint of said fixed block and said mobile block and respectively in the disengagement of said second engaging and constraining means and said first mechanical constraining means, and thus in the mechanical release of said fixed block and said mobile block, wherein said fixed block and said mobile block comprise third mechanical constraining means and respectively fourth engaging and constraining means, and wherein said third mechanical constraining means can switch between a first position, in which they are released from said fourth engaging and constraining means and a second position in which they engage and constrain said fourth engaging and constraining means, wherein the switching of said first mechanical constraining means from said first position towards said second position translates into the automatic switching of said third mechanical constraining means from said first position to said second position.

According to an embodiment, the switching of said first mechanical constraining means from said second position towards said first position translates into the automatic switching of said third mechanical constraining means from said second position to said first position.

According to an embodiment, said fixed block comprises elastic means which act on said third mechanical constraining means so that the switching of said third mechanical constraining means from said first position towards said second position takes place against the elastic bias applied by said elastic means, whilst the switching of said third mechanical constraining means from said second position towards said first position occurs under the elastic bias applied by said elastic means.

According to an embodiment, said first mechanical constraining means and said third mechanical constraining means define a first engaging surface and respectively a third engaging surface, and wherein the switching of said first constraining means from said first position towards said second position translates into a progressive thrust on said third engaging surface by said first engaging surface, and thus into the automatic switching of said third mechanical constraining means from said first position to said second position.

According to an embodiment, said first mechanical constraining means define a second engaging and constraining surface, and wherein the switching of said first mechanical constraining means towards said second position translates into the mutual progressive engagement of said second engaging surface and said second engaging and constraining means and in the progressive approaching of said first block and said second block.

According to an embodiment, said first constraining means define a fourth engaging and constraining surface, wherein the switching of said first mechanical constraining means towards said first position translates into the mutual progressive engagement of said fourth engaging surface and said second engaging and constraining means of said movable block and in the progressive distancing of said fixed and movable blocks.

According to an embodiment, said first mechanical constraining means can be switched by rotation.

According to an embodiment, said third mechanical constraining means can be switched by rotation.

According to an embodiment, said mechanical constraining means can be switched by rotation about rotation axes which are distinct and substantially parallel. According to one embodiment, said first mechanical constraining means comprise a plate, wherein said first engagement surface is defined by a portion of the outer peripheral surface of said plate.

According to an embodiment, said second engaging surface and said fourth engaging surface are defined by a blind slot or notch which extends from said outer peripheral surface of said plate towards the inside of said plate.

According to an embodiment, said slot or notch comprises a blind end portion, wherein that said second engaging and constraining means are positioned at said blind end portion with said fixed block and said movable block in a mutual constraining condition and with said first mechanical constraining means in said first switching position.

According to an embodiment, said fixed block comprises at least one first male or female hydraulic coupling and can thus constitute the terminal part of a first hydraulic circuit of a main operating machine.

According to an embodiment, said movable block comprises at least one second female or male hydraulic coupling, respectively, and is thus adapted to constitute the end part of a second hydraulic circuit of an apparatus, and wherein said first hydraulic coupling and second hydraulic coupling are adapted to be hydraulically connected so as to make the hydraulic connection between said first and second hydraulic circuits, respectively, of said main operating machine and said equipment. According to an embodiment, the switching of said first mechanical constraint means into said second position also translates into the mechanical constraint of said fixed and movable parts and in the hydraulic connection between said first and second couplings of said fixed part and of said movable part, respectively,

Further possible embodiments of the present invention are defined in the claims.

### BRIEF DESCRIPTION OF THE FIGURES

Hereinafter, the present invention will be explained by means of the following detailed description of the embodiments shown in the drawings. However, the present invention is not limited to the embodiments described hereinafter and shown in the drawings; on the contrary, all the variants of the embodiments described below and shown in the drawings which will be apparent to a person skilled in the art fall within the scope of the invention.

In the drawings:
- figures from 1 to 4 each show a perspective view of a coupling assembly and/or of component parts of a coupling assembly according to the prior art;
- figures from 5 to 12 each show a perspective or side view, respectively, of a coupling assembly and/or of component parts of a coupling assembly according to an embodiment of the present invention during the various steps of the constraining procedures.

### DETAILED DESCRIPTION OF THE PRESENT INVENTION

The present invention is particularly advantageously applied to the case of coupling assemblies of the multiple connection type, with manual actuating lever, this being the reason why hereinafter the present invention will be explained with reference to a connection assembly of the multiple connection type.

The possible applications of the present invention are however not limited either to the couplings of the multiple connection type or to those equipped with individual mechanical constraint (the self-retaining device above).

In the embodiment of the coupling assembly according to the present invention shown in the figures from 5 to 12, the coupling assembly 100 comprises a movable part 300 (also named block hereinafter) with coupling 301, and a fixed part 200 (also named block hereinafter) with couplings 201. The fixed part 200 comprises a lever L with a U-shaped end part and thus comprising two arms or tines 401s and 401d, wherein the rotation of the lever L about the rotation axis R-R translates into rotation in the same direction of rotation of two plates or cams 401, and wherein each of the two plates or cams 401 defines an engagement groove (notch or slot) 405. Furthermore, the movable part 300 comprises abutment means 402 (substantially two pins or pawls) adapted to be each engaged by a corresponding groove 405 during rotation of the lever L. In relation to the cams 401 (and relative grooves 405) and to the pawls 402, the mechanical connection and disconnection method of the mobile part 300 and of the fixed part 200 substantially correspond to those of a coupling assembly according to the prior art and may be summarized briefly as follows.

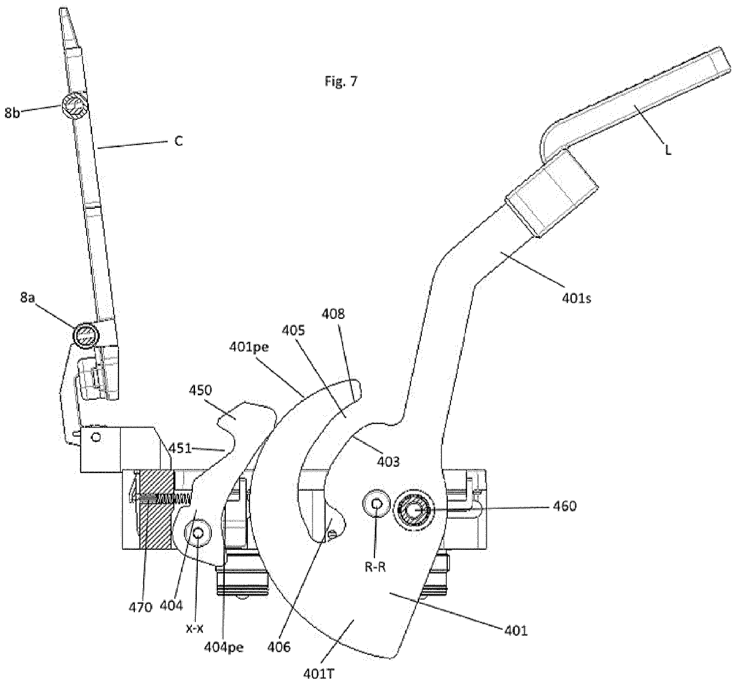

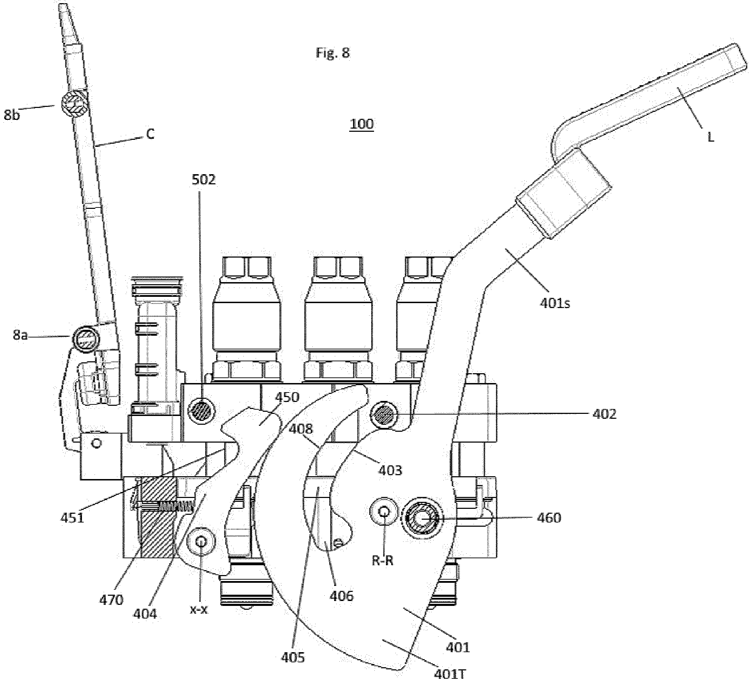

With the lever L and the plates or cams 401 in the position of figure 7 (substantial first end stop position of the lever L), the movable part 300 is approached (in practice positioned frontally to or in all cases made to correspond and/or mate with) the fixed part 200 (figure 8), wherein attention is paid to position each coupling 301 at the corresponding coupling 201; this operation is facilitated by guide means Gm (protruding pins) and corresponding housings (not shown), respectively of the movable part 300 and of the fixed part 200, the reciprocal engaging of which translates into the correct positioning of the movable part 300 and of the fixed part 200. With the movable part 300 and fixed part 200 positioned as described above (figure 8), the rotation of the lever L away from the first end stop position in figure 7 (and thus clockwise with respect to the figures), translates into the engagement of the pawls 402 by the engaging grooves 405 of the plates 401, respectively. It is worth noting that each groove 405 is in practice defined as anticipated by a notch or slot which extends from the outer peripheral surface 401pe of the plate or the corresponding cam 401 (figures 7 and 8), wherein the groove 405 extends from the surface 401pe toward the inside of the plate or cam 401, and wherein each groove 405 defines a first contrasting and engaging surface 403 and a second contrasting and engaging surface 408 opposite to said first contrasting and engaging surface 403, and wherein the groove 405 comprises a blind end portion 406. The rotation of the lever L away from its first end stop position in figure 7 thus translates into a thrust exerted by the first contrasting and engaging surfaces 408 on the respective pawls 402, and thus on the entire movable part 300, which is thus progressively approached to the fixed part 200.

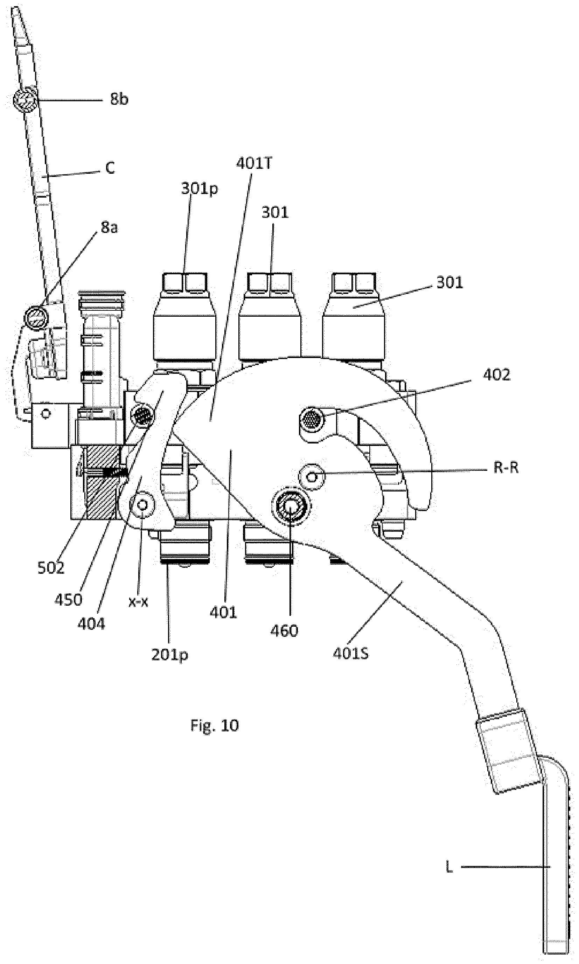

Indeed, as shown, the further rotation of the lever L moving further away from the first end stop position and to the reaching of the second end stop position in figure 10, translates, by virtue of the conformation of the grooves 405, which each define the aforesaid first contrasting and engaging surface 403 with an arc or cam development, into the definitive approaching of the movable part 300 and fixed part 200 and into the consequent hydraulic connection of the couplings 301 and 201, wherein in the reciprocal position of figure 10, the movable part 300 and the fixed part 200 are mechanically constrained to each other, the pawls 402 being at this point housed in the blind part 406 of the groove 405 of the respective plate or cam 401.

Obviously, the releasing of the movable part 300 from the fixed part 200 may occur by re-switching the lever L from the second end stop position (figure 10) to the first end stop position (figure 7). Indeed, the rotation of the lever L away from the second end stop position (and thus counterclockwise with respect to the figures) until reaching substantially the first end stop position in figure 7, translates, by virtue of the conformation of the grooves 405, which each define the aforesaid second contrasting and engaging surface 403, also with arc or cam extension, into a thrust by the second contrasting and engaging surface 403 onto the respective pawls 402 and thus onto the entire movable part 300, which is thus progressively moved away from the fixed part 200, wherein with the lever L in the first end stop position, and thus with the pawls 402 each at the end portion of the respective groove 405, wherein the movable part 300 is practically released (or in all cases can be released) from the fixed part 200.

Furthermore, as shown, the fixed part 200 comprises safety means adapted to avert the accidental and undesired switching of the lever L, from the second end stop position towards the first end stop position.

Said safety means substantially comprise a locking and unlocking mechanism (substantially known in itself and therefore not shown and not described in detail hereinafter) which can be switched between a first locking configuration, in which the lever L is locked in the second end or limit stop position, and an unlocking configuration, in which the lever L may be rotated from the second end or limit stop position towards the first limit stop position. Furthermore, the switching of the locking and unlocking mechanism is obtained by means of a locking and unlocking button 460 (of the respective mechanism), wherein the switching of the mechanism from the first configuration to the second configuration is obtained by pressing the button 460. So, in practice, with the lever L in its second limit stop position (figure 10), at least one plate 401 and the fixed part 200 are reciprocally constrained (also in this case, by the automatic action of the locking and unloading mechanism), so that the switching of the lever L from the second limit stop position towards the first limit stop position is subordinated to the preventive switching of the mechanism from the first configuration to the second configuration by pressing either the button or on the knob 460.

It is worth noting that the locking mechanism is not essential for the purposes of the present invention which, on the contrary, can be applied also to couplings not provided with the locking mechanism, or to couplings in which the locking mechanism performs the dual action of locking the lever L both in closing position and in opening position.

As anticipated, the coupling assembly according to the present invention comprises a solution adapted to guarantee that the mechanical constraint of fixed parts 200 and 300 according to the aforesaid methods translates into the simultaneous hydraulic connection of all the couplings 201 and respectively 301, even of the most peripheral ones 201p and 301p respectively; said solution is described in detail below. As shown, the fixed part 200 comprises a pair of latches 404 which can be switched by rotation with respect to a common rotation axis X-X which is located near the peripheral couplings 201P and 301P, each latch 404 being arranged at a plate 401, in particular at an outer peripheral surface 404pe placed facing the outer peripheral surface 401pe of the respective plate 401.

Furthermore, and again as shown, the movable part 300 comprises a further pair of pawls 502, each adapted to be engaged by a respective latch 404 according to the methods described in detail below.

Each of the latches 404 comprises an end portion 450 opposite to the rotation axis X-X and hook-shaped, which thus defines a groove 451 adapted to engage a respective pawl 404.

The mutual engagement and disengagement of the latches 404 respectively onto and from its own pawl 502 may be summarized as follows.

With the lever L and the plates or cams 401 in the position in figure 7 (substantial first limit stop position of the lever L), both latches 404 are maintained in their first limit stop position each by a spring 470; it is worth noting that the latches 404, in the first limit stop position, does not interfere with the movable part 300, nor with the pawls 502, during the mutual alignment operations of the movable part 300 and of the fixed part 200 (figure 8), and even not during the first step of rotation of the lever L (figure 9), wherein in all cases the progressive rotation of the lever L with consequent progressive approach of the movable part 300 to the fixed part 200 translates into the positioning of the pawls 502 each at the height of the engaging groove 451 of the respective latch 404 (figures 9 and 10).

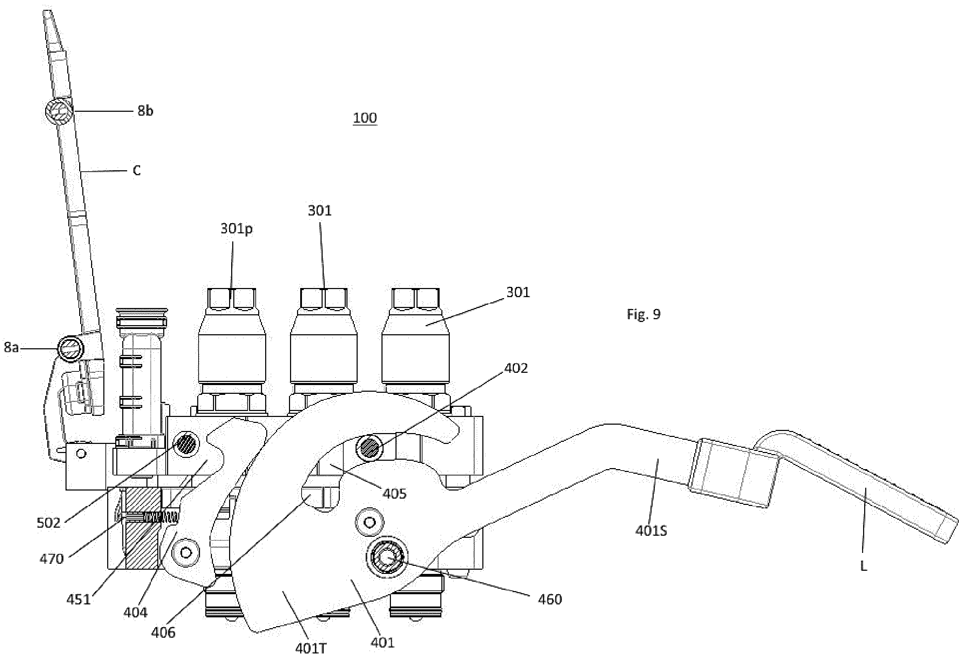

In particular, from the position in figure 9, the further rotation of the lever L away from its first limit stop position translates into the progressive engagement of the outer peripheral surfaces 401pe each with the outer peripheral surface 404pe of the respective latch 404, wherein then the latches 404 are each switched by rotation toward their second end position (counterclockwise with respect to the figures) against the bias of the springs 470 and so as to engage a respective pawl 502 each, wherein the accidental disengagement of the latches 404 from the pawls 502 is prevented by the end parts 401T of the plates 401 which act each by thrusting against the respective latch 404, and wherein the switching of the latches 404 towards the respective first limit stop positions may occur only by switching the lever L towards its first limit stop position.

Indeed, the rotation of the lever L away from the second limit stop position (and thus counterclockwise with respect to the figures) and until the substantial first limit stop position in figure 7 is reached, translates into the mutual disengagement of each of the end portions 401T from the respective outer peripheral surface 404PE, and thus into the possibility for the latches 404 to rotate under the bias of the springs 470, each towards its first limit stop position (clockwise with respect to the figures) disengaging the respective pawls 502 in this manner.

So, it clearly arises from the above that the coupling assembly according to the present invention guarantees that the mechanical constraint of fixed part 200 and of the movable part 300 translates into the optimal and reliable hydraulic connection of all couplings 201 and 201, in particular even of the most peripheral ones 201p and 301p and makes it possible to avert or at least minimize the risk of accidental hydraulic disconnection of the couplings. Indeed, during the mutual constraint of the mobile parts 300 and 200, the resistance offered by the couplings is overcome by the combined action of the plates 401 and of the latches 404 which act on the pawls 402 and respectively 502 and not by the action of the plates 401 alone.

Similarly, during use, with the couplings 201 and 301 (as well as 201p and 301p) pressurized, the dual resistance offered by the combined action of the plates 401 (on the pawls 402) and of the latches 404 (on the pawls 502) makes it possible to uniformly distribute the resistance offered to the thrust on the movable part 300 due to the pressure, and thus avoid or at least to avert the accidental detachment of the couplings, even the most peripheral ones 201p and 301p.

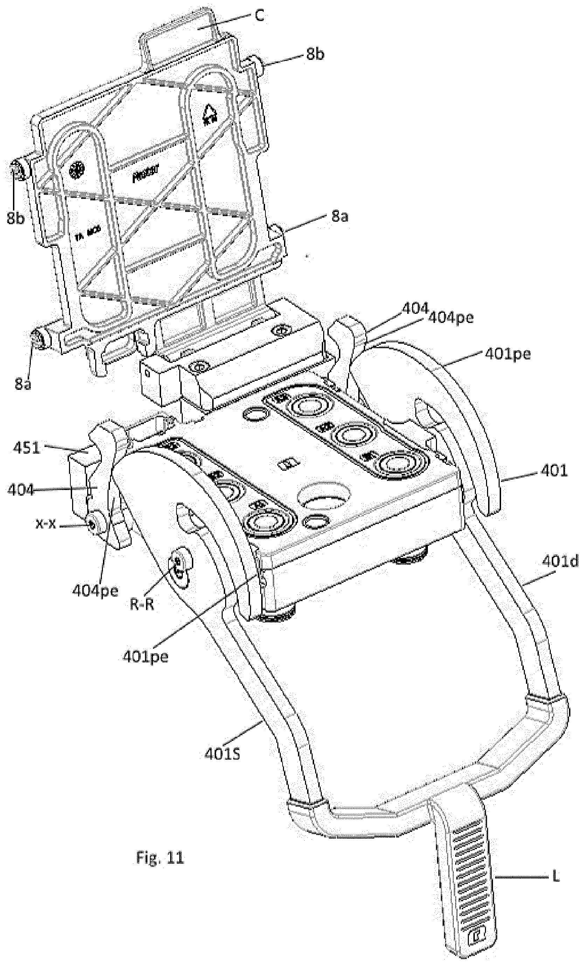

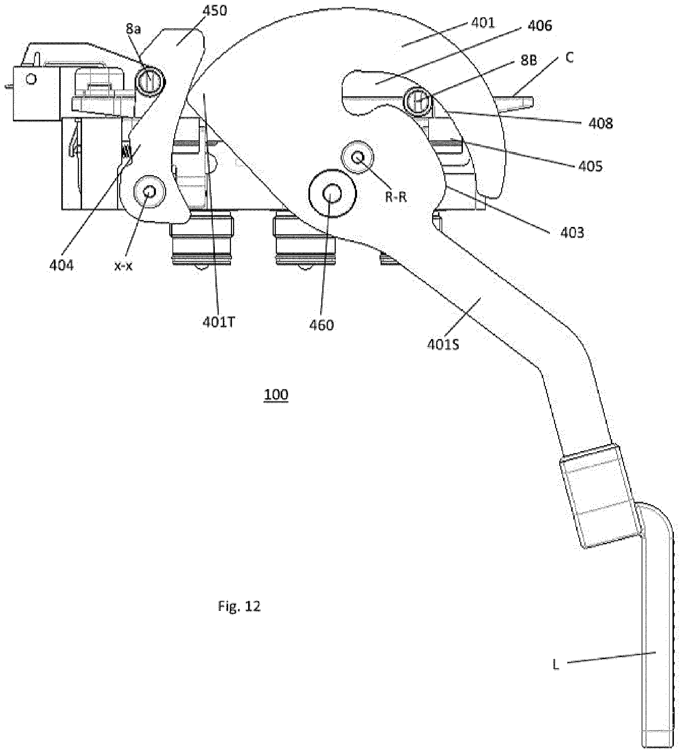

A further embodiment of the coupling assembly according to the present invention will be described below with reference to figures 11 and 12.

As shown, the fixed part 200 of the coupling assembly 100 comprises a cover C adapted to be switched by rotation (in the absence of the movable part 300) from a first limit stop position thereof (said opening position, figure 11) to a second limit stop position thereof (said closing position), in which it is arranged so as to protect the couplings 201, whereby preventing infiltrations of dirt (dust or the like) but also protecting the couplings from shocks, knocks or the like.

As shown, also the cover C comprises two pairs of pawls 8a and 8b respectively, wherein with the cover C in closing position (substantial second limit stop position, figure 12), the switching of the lever L from its first limit stop position in figure 7 towards its second limit stop position (figures 10 and 12) translates into the engagement of the pawls 8b of the first pair and the pawls 8a of the second pair by the plates 401 (grooves 405) and respectively of the latches 404 (grooves 451) according to methods corresponding to those described previously as to the engagement of the pawls 402 and 502, wherein a detailed description is omitted for the sake of brevity.

Similarly, with the cover C in closing position (figure 12), the switching of the lever L from its second limit stop position (figure 12) towards its first limit stop position (figures 7) translates into the disengagement of the pawls 8b of the first pair and the pawls 8a of the second pair from the plates 401 (grooves 405) and respectively from the latches 404 (grooves 451) according to methods corresponding to those described above as to the disengagement of the pawls 402 and 502, wherein a detailed description is omitted for the sake of brevity also in this case.

It has thus been demonstrated by means of the above detailed description of the embodiments of the present invention shown in the drawings that the present invention achieves the predefined objects and/or goals by overcoming the drawbacks affecting the prior art.

In particular, the present invention makes it possible to guarantee that the mechanical constraint between the fixed and movable parts of a coupling assembly translates into the optimal and hydraulic connection of all couplings, also of the most peripheral ones and to avert or at least minimize the risk of accidental hydraulic disconnection of the couplings.

Although the present invention is explained above by means of a detailed description of the embodiments shown in the drawings the present invention is not limited to the embodiments described above and shown in the drawings. On the contrary, all the modifications and/or variants of the embodiments described above and shown in the drawings which will appear obvious and immediate to a person skilled in the art fall within the scope of the present invention.

For examples, although in the embodiments described above with reference to the drawings the movable part 300 and the fixed part 200 comprise a plurality of couplings 301 and respectively 201, the number of couplings may vary according to needs and/or the age or circumstances, from a minimum of one to a maximum which depends on the type of hydraulic circuits to be connected. Furthermore, the lever may be rotationally fixed either to the fixed part 200 (as shown in the examples described and shown) or to the movable part 300, wherein in this case the engaging or contrasting means 402 will be on the side of the fixed part.

Moreover, the couplings 201 and 301 may be of any type, e.g. but not necessary but of the type comprising a self-retaining device (reciprocal between male coupling and female coupling), in particular with a ball crown and respective housing groove of the male coupling and lock ring in the female coupling, the couplings with self-retaining device conferring greater stability to the mechanical constraint between fixed part 200 and movable part 300.

The scope of the present invention is thus defined by the claims.

## Claims

1. A hydraulic and/or pneumatic coupling assembly (100) comprising a fixed block (200) adapted to be fixed to a main operating machine, and a movable block (300), said fixed block (200) and said movable block (300) comprising first mechanical constraining means (401) which are adapted to be switched between a first position and a second position and second engaging and constraining means (402) respectively, wherein the switching of said first mechanical constraining means (401) from said first position to said second position and from said second position to said first position translates into a progressive engagement of said second engaging and constraining means (402) and said first mechanical constraining means (401) and thus into the mechanical constraint of said fixed block (200) and said mobile block (300) and respectively in the disengagement of said second engaging and constraining means (402) and said first mechanical constraining means (401), and thus in the mechanical release of said fixed block (200) and said mobile block (300); wherein said fixed block (200) and said mobile block (300) comprise third mechanical constraining means (404) and respectively fourth engaging and constraining means (502), and wherein said third mechanical constraining means (404) are adapted to be switched between a first position, in which they are released from said fourth engaging and constraining means (502) and a second position in which they engage and constrain said fourth engaging and constraining means (502) **characterized in that** the switching of said first mechanical constraining means (401) from said first position towards said second position translates into the automatic switching of said third mechanical constraining means (404) from said first position to said second position.

2. A coupling assembly (100) according to claim 1, **characterized in that** the switching of said first mechanical constraining means (401) from said second position towards said first position translates into the automatic switching of said third mechanical constraining means (404) from said second position towards said first position.

3. A coupling assembly (100) according to any one of claims from 1 to 2, **characterized in that** said fixed block (200) comprises elastic means (470) which act on said third mechanical constraining means (404) so that the switching of said third mechanical constraining means (404) from said first position towards said second position takes place against the elastic bias applied by said elastic means (470), whilst the switching of said third mechanical constraining means (404) from said second position towards said first position occurs under the elastic bias applied by said elastic means (470).

4. A coupling assembly (100) according to any one of claims from 1 to 3, **characterized in that** said first mechanical constraining means (401) and said third mechanical constraining means (404) define a first engaging surface (401PE) and respectively a third engaging surface (404PE), and **in that** the switching of said first constraining means (401) from said first position towards said second position translates into a progressive thrust on said third engaging surface (404pe) by said first engaging surface (401 PE), and thus into the automatic switching of said third mechanical constraining means (404) from said first position to said second position.

5. A coupling assembly (100) according to any one of the claims from 1 to 4, **characterized in that** said first mechanical constraining means (401) define a second engaging and constraining surface (408), and **in that** the switching of said first mechanical constraining means (401) towards said second position translates into the mutual progressive engagement of said second engaging surface (408) and said second engaging and constraining means (402) and in the progressive approaching of said first block (200) and said second block (300).

6. A coupling assembly (100) according to any one of the claims from 1 to 5, **characterized in that** said first mechanical constraining means (401) define a fourth engaging and constraining surface (403), and **in that** the switching of said first mechanical constraining means (401) towards said first position translates into the mutual progressive engagement of said fourth engaging surface (403) and said second engaging and constraining means (402) of said movable block (300) and into the progressive distancing said first block (200) and said second block (300) as a result of a thrust exerted by said fourth engaging and constraining surface (403) against said second engaging and constraining means (402).

7. A coupling assembly (100) according to one of the claims from 1 to 6, **characterized in that** said first mechanical constraining means (401) can switch by rotation.

8. A coupling assembly (100) according to one of the claims from 1 to 7, **characterized in that** said third mechanical constraining means (404) can switch by rotation.

9. A coupling assembly (100) according to claims 7 and 8, **characterized in that** said first mechanical constraining means (401) and said third mechanical constraining means (404) can switch by rotation about rotation axes which are distinct and substantially parallel.

10. A coupling assembly (100) according to any one of claims 4 to 9, **characterized in that** said first mechanical constraining means (401) comprise a plate, and **in that** said first engaging surface (401pe) is defined by a portion of the outer peripheral surface of said plate (401).

11. A coupling assembly (100) according to claim 10, **characterized in that** said second engaging surface (408) and said fourth engaging surface (403) are defined by a blind slot or notch (405) which extends from said outer peripheral surface (401pe) of said plate (401) towards the inside of said plate (401).

12. A coupling assembly (100) according to claim 11, **characterized in that** said slot or notch (405) comprises a blind end portion (406), and **in that** said fixed block (200) and said movable block (300) in a mutual constraining condition and with said first mechanical constraining means (401) in said first switching position, said second engaging and constraining means (402) are positioned at said blind end portion (406).

13. A coupling assembly (100) according to any one of claims from 1 to 12, **characterized in that** said fixed block (200) comprises at least one first male or female hydraulic coupling (201) and can thus constitute the terminal part of a first hydraulic circuit of a main operating machine.

14. A coupling assembly (100) according to claim 13, **characterized in that** said movable block (300) comprises at least one second female or male hydraulic coupling (301), respectively, and is thus adapted to constitute the end part of a second hydraulic circuit of an apparatus, and **in that** said first hydraulic coupling (201) and second hydraulic coupling (301) are adapted to be hydraulically connected so as to make the hydraulic connection between said first and second hydraulic circuits, respectively, of said main operating machine and said equipment.

15. A coupling assembly (100) according to claims 13 and 14, **characterized in that** the switching of said first mechanical constraining means (401) into said second position also translates into the mechanical constraining of said fixed block (200) and said movable block (300) and in the hydraulic connection between said first coupling (201) and said second coupling (301) of said fixed block (200) and of said movable block (300), respectively.

## Patentansprüche

1. Eine hydraulische und/oder pneumatische Kupplungsanordnung (100), umfassend einen festen Block (200), der zur Befestigung an einer Hauptbetriebsmaschine geeignet ist, und einen beweglichen Block (300), wobei der feste Block (200) und der bewegliche Block (300) jeweils erste mechanische Beschränkungsmittel (401), die geeignet sind zwischen einer ersten Position und einer zweiten Position umgeschaltet zu werden, und zweite Eingriffs- und Beschränkungsmittel (402) umfassen, wobei das Umschalten der ersten mechanischen Beschränkungsmittel (401) von der ersten Position auf die zweite Position und von der zweiten Position auf die erste Position zu einem fortschreitenden Eingriff der zweiten Eingriffs- und Beschränkungsmittel (402) und der ersten mechanischen Beschränkungsmittel (401) und damit zur mechanischen Beschränkung des festen Blocks (200) und des beweglichen Blocks (300), und jeweils zum Lösen der zweiten Eingriffs- und Beschränkungsmittel (402) und der ersten mechanischen Beschränkungsmittel (401), und damit zur mechanischen Freigabe des festen Blocks (200) und des beweglichen Blocks (300) führt; wobei der feste Block (200) und der bewegliche Block (300) jeweils dritte mechanische Beschränkungsmittel (404) und vierte Eingriffs- und Beschränkungsmittel (502) umfassen, und wobei die dritten mechanischen Beschränkungsmittel (404) geeignet sind zwischen einer ersten Position, in der sie von den vierten Eingriffs- und Beschränkungsmittel (502) gelöst werden, und einer zweiten Position, in der sie die vierten Eingriffs- und Beschränkungsmittel (502) eingreifen und beschränken, umgeschaltet zu werden, **dadurch gekennzeichnet, dass**, das Umschalten der ersten mechanischen Beschränkungsmittel (401) von der ersten Position in Richtung der zweiten Position zum automatischen Umschalten der dritten mechanischen Beschränkungsmittel (404) von der ersten Position auf die zweite Position führt.

2. Kupplungsanordnung (100) nach Anspruch 1, **dadurch gekennzeichnet dass** das Umschalten der ersten mechanischen Beschränkungsmittel (401) von der zweiten Position in Richtung der ersten Position zum automatischen Umschalten der dritten mechanischen Beschränkungsmittel (404) von der zweiten Position in Richtung der ersten Position führt.

3. Kupplungsanordnung (100) nach irgendeinem der Ansprüche von 1 bis 2, **dadurch gekennzeichnet, dass** der feste Block (200) elastische Mittel (470) umfasst, die auf die dritten mechanischen Beschränkungsmittel (404) einwirken, so dass das Umschalten der dritten mechanischen Beschränkungsmittel (404) von der ersten Position in Richtung der zweiten Position gegen die von den elastischen Mitteln (470) aufgebrachte elastische Vorspannung erfolgt, während das Umschalten der dritten mechanischen Beschränkungsmittel (404) von der zweiten Position in Richtung der ersten Position unter der durch die elastischen Mittel (470) aufgebrachten elastischen Vorspannung erfolgt.

4. Kupplungsanordnung (100) nach irgendeinem der Ansprüche von 1 bis 3, **dadurch gekennzeichnet, dass** die ersten mechanischen Beschränkungsmittel (401) und die dritten mechanischen Beschränkungsmittel (404) eine erste Eingriffsfläche (401PE) und jeweils eine dritte Eingriffsfläche (404PE) definieren, und dass das Umschalten der ersten Beschränkungsmittel (401) von der ersten Position in Richtung der zweiten Position zu einem fortschreitenden Schub auf die dritte Eingriffsfläche (404pe) durch die erste Eingriffsfläche (401 PE), und somit zum automatischen Umschalten der dritten mechanischen Beschränkungsmittel (404) von der ersten Position in Richtung der zweiten Position führt.

5. Kupplungsanordnung (100) nach irgendeinem der Ansprüche von 1 bis 4, **dadurch gekennzeichnet, dass** die ersten mechanischen Beschränkungsmittel (401) eine zweite Eingriffs- und Beschränkungsfläche (408) definieren und, dass das Umschalten der ersten mechanischen Beschränkungsmittel (401) in Richtung der zweiten Position zu einem gegenseitigen fortschreitenden Eingriff der zweiten Eingriffsfläche (408) und der zweiten Eingriffs- und Beschränkungsmittel (402) und zu einem fortschreitenden Annähern des ersten Blocks (200) und des zweiten Blocks (300) führt.

6. Kupplungsanordnung (100) nach irgendeinem der Ansprüche von 1 bis 5, **dadurch gekennzeichnet, dass** die ersten mechanischen Beschränkungsmittel (401) eine vierte Eingriffs- und Beschränkungsfläche (403) definieren und, dass das Umschalten der ersten mechanischen Beschränkungsmittel (401) in Richtung der ersten Position zu einem gegenseitigen fortschreitenden Eingriff der vierten Eingriffsfläche (403) und der zweiten Eingriffs- und Beschränkungsmittel (402) des beweglichen Blocks (300) und zu einem fortschreitenden Abstand des ersten Blocks (200) und des zweiten Blocks (300) infolge eines Schubs führt, der von der vierten Eingriffs- und Beschränkungsfläche (403) gegen die zweiten Eingriffs- und Beschränkungsmittel (402) ausgeübt wird.

7. Kupplungsanordnung (100) nach irgendeinem der Ansprüche von 1 bis 6, **dadurch gekennzeichnet, dass** die ersten mechanischen Beschränkungsmittel (401) durch Drehung geschaltet werden können.

8. Kupplungsanordnung (100) nach irgendeinem der Ansprüche von 1 bis 7, **dadurch gekennzeichnet, dass** die dritten mechanischen Beschränkungsmittel (404) durch Drehung geschaltet werden können.

9. Kupplungsanordnung (100) nach den Ansprüchen 7 und 8, **dadurch gekennzeichnet, dass** die ersten mechanischen Beschränkungsmittel (401) und die dritten mechanischen Beschränkungsmittel (404) durch Drehung um Drehachsen geschaltet werden können, die verschieden und im Wesentlichen parallel sind.

10. Kupplungsanordnung (100) nach irgendeinem der Ansprüche von 4 und 9, **dadurch gekennzeichnet, dass** die ersten mechanischen Beschränkungsmittel (401) eine Platte umfassen und, dass die erste Eingriffsfläche (401pe) durch einen Abschnitt der äußeren Umfangsfläche der Platte (401) definiert ist.

11. Kupplungsanordnung (100) nach Anspruch 10, **dadurch gekennzeichnet, dass** die zweite Eingriffsfläche (408) und die vierte Eingriffsfläche (403) durch einen Blindschlitz oder eine Kerbe (405) definiert sind, die sich von der äußeren Umfangsfläche (401pe) der Platte (401) in Richtung der Innenseite der Platte (401) erstreckt.

12. Kupplungsanordnung (100) nach Anspruch 11, **dadurch gekennzeichnet, dass** der Schlitz oder die Kerbe (405) einen blinden Endabschnitt (406) umfasst, und dass der feste Block (200) und der bewegliche Block (300) sich in einem gegenseitigen Beschränkungszustand befinden und die ersten mechanischen Beschränkungsmittel (401) sich in der ersten Schaltposition befinden, die zweiten Eingriffs- und Beschränkungsmittel (402) in dem blinden Endabschnitt (406) positioniert sind.

13. Kupplungsanordnung (100) nach irgendeinem der Ansprüche von 1 bis 12, **dadurch gekennzeichnet, dass** der feste Block (200) mindestens eine erste männliche oder weibliche Hydraulikkupplung (201) umfasst und somit den Endteil einer ersten Hydraulikschaltung einer Hauptbetriebsmaschine bilden kann.

14. Kupplungsanordnung (100) nach Anspruch 13, **dadurch gekennzeichnet, dass** der bewegliche Block (300) jeweils mindestens eine zweite weibliche oder männliche hydraulische Kupplung (301) umfasst, und somit geeignet ist, den Endteil eines zweiten hydraulischen Kreislaufs einer Einrichtung zu bilden, und dass die erste Hydraulikkupplung (201) und die zweite Hydraulikkupplung (301) geeignet sind, hydraulisch verbunden zu werden, um die hydraulische Verbindung zwischen dem ersten und dem zweiten Hydraulikkreis der Hauptbetriebsmaschine und der besagten Ausrüstung jeweils herzustellen.

15. Kupplungsanordnung (100) nach den Ansprüchen 13 und 14, **dadurch gekennzeichnet, dass** das Umschalten der ersten mechanischen Beschränkungsmittel (401) in die zweite Position auch zur mechanischen Beschränkung des festen Blocks (200) und des beweglichen Blocks (300), sowie zur hydraulischen Verbindung zwischen der ersten Kupplung (201) und der zweiten Kupplung (301) des festen Blocks (200) und des beweglichen Blocks (300) jeweils führt.

## Revendications

1. Ensemble d'accouplement hydraulique et/ou pneumatique (100) comprenant un bloc fixe (200) apte à être fixé à une machine de travail principale, et un bloc mobile (300), ledit bloc fixe (200) et ledit bloc mobile (300) comprenant des premiers moyens de contrainte mécanique (401) qui sont aptes à être commutés entre une première position et une deuxième position et des deuxièmes moyens d'engagement et de contrainte (402) respectivement, dans lequel la commutation desdits premiers moyens de contrainte mécanique (401) de ladite première position à ladite deuxième position et de ladite deuxième position à ladite première position se traduit par un engagement progressif desdits deuxièmes moyens d'engagement et de contrainte (402) et desdits premiers moyens de contrainte mécanique (401) et donc par la contrainte mécanique dudit bloc fixe (200) et dudit bloc mobile (300) et respectivement par le désengagement desdits deuxièmes moyens d'engagement et de contrainte (402) et desdits premiers moyens de contrainte mécanique (401), et donc par la libération mécanique dudit bloc fixe (200) et dudit bloc mobile (300) ; dans lequel ledit bloc fixe (200) et ledit bloc mobile (300) comprennent des troisièmes moyens de contrainte mécanique (404) et respectivement des quatrièmes moyens d'engagement et de contrainte (502), et dans lequel lesdits troisièmes moyens de contrainte mécanique (404) sont aptes à être commutés entre une première position, dans laquelle ils sont libérés desdits quatrièmes moyens d'engagement et de contrainte (502) et une deuxième position dans laquelle ils engagent et contraignent lesdits quatrièmes moyens d'engagement et de contrainte (502) **caractérisé en ce que** la commutation desdits premiers moyens de contrainte mécanique (401) de ladite première position vers ladite deuxième position se traduit par la commutation automatique desdits troisièmes moyens de contrainte (404) de ladite première position à ladite deuxième position.

2. Ensemble d'accouplement (100) selon la revendication 1, **caractérisé en ce que** la commutation desdits premiers moyens de contrainte mécanique (401) de ladite deuxième position vers ladite première position se traduit par la commutation automatique desdits troisièmes moyens de contrainte mécanique (404) de ladite deuxième position vers ladite première position.

3. Ensemble d'accouplement (100) selon l'une quelconque des revendications de 1 à 2, **caractérisé en ce que** ledit bloc fixe (200) comprend des moyens élastiques (470) qui agissent sur lesdits troisièmes moyens de contrainte mécanique (404) de sorte que la commutation desdits troisièmes moyens de contrainte mécanique (404) de ladite première position vers ladite deuxième position aura lieu contre la sollicitation élastique appliquée par lesdits moyens élastiques (470), tandis que la commutation desdits troisièmes moyens de contrainte mécanique (404) de ladite deuxième position vers ladite première position se produit sous la sollicitation élastique appliquées par lesdits moyens élastiques (470).

4. Ensemble d'accouplement (100) selon l'une quelconque des revendications de 1 à 3, **caractérisé en ce que** lesdits premiers moyens de contrainte mécanique (401) et lesdits troisièmes moyens de contrainte mécanique (404) définissent une première surface d'engagement (401PE) et respectivement une troisième surface d'engagement (404PE) et **en ce que** la commutation desdits premiers moyens de contrainte (401) de ladite première position vers ladite deuxième position se traduit pas une poussée progressive sur ladite troisième surface d'engagement (404pe) par ladite première surface d'engagement (401 PE), et donc par la commutation automatique desdits troisièmes moyens de contrainte mécanique (404) de ladite première position à ladite deuxième position.

5. Ensemble d'accouplement (100) selon l'une quelconque des revendications de 1 à 4, **caractérisé en ce que** lesdits premiers moyens de contrainte mécanique (401) définissent une deuxième surface d'engagement et de contrainte (408), et **en ce que** la commutation desdits premiers moyens de contrainte mécanique (401) vers ladite deuxième position se traduit par l'engagement progressif mutuel de ladite deuxième surface d'engagement (408) et desdits deuxièmes moyens d'engagement et de contrainte (402) et par le rapprochement progressif dudit premier bloc (200) et dudit deuxième bloc (300).

6. Ensemble d'accouplement (100) selon l'une quelconque des revendications de 1 à 5, **caractérisé en ce que** lesdits premiers moyens de contrainte mécanique (401) définissent une quatrième surface d'engagement et de contrainte (403), et **en ce que** la commutation desdits premiers moyens de contrainte mécanique (401) vers ladite première position se traduit par l'engagement progressif mutuel de ladite quatrième surface d'engagement (403) et desdits deuxièmes moyens d'engagement et de contrainte (402) dudit bloc mobile (300) et par l'éloignement progressif dudit premier bloc (200) et dudit deuxième bloc (300) comme résultat d'une poussée exercée par ladite quatrième surface d'engagement et de contrainte (403) contre lesdits deuxièmes moyens d'engagement et de contrainte (402).

7. Ensemble d'accouplement (100) selon l'une des revendications de 1 à 6, **caractérisé en ce que** lesdits premiers moyens de contrainte mécanique (401) peuvent commuter par rotation.

8. Ensemble d'accouplement (100) selon l'une des revendications de 1 à 7, **caractérisé en ce que** lesdits troisièmes moyens de contrainte mécanique (404) peuvent commuter par rotation.

9. Ensemble d'accouplement (100) selon les revendications 7 et 8, **caractérisé en ce que** lesdits premiers moyens de contrainte mécanique (401) et lesdits troisièmes moyens de contrainte mécanique (404) peuvent commuter par rotation autour d'axes de rotation qui sont distincts et sensiblement parallèles.

10. Ensemble d'accouplement (100) selon l'une quelconque des revendications 4 à 9, **caractérisé en ce que** lesdits premiers moyens de contrainte mécanique (401) comprennent une plaque, et **en ce que** ladite première surface d'engagement (401pe) est définie par une portion de la surface périphérique externe de ladite plaque (401).

11. Ensemble d'accouplement (100) selon la revendication 10, **caractérisé en ce que** ladite deuxième surface d'engagement (408) et ladite quatrième surface d'engagement (403) sont définies par une fente ou une entaille borgne (405) qui s'étend de ladite surface périphérique externe (401pe) de ladite plaque (401) vers l'intérieur de ladite plaque (401).

12. Ensemble d'accouplement (100) selon la revendication 11, **caractérisé en ce que** ladite fente ou entaille (405) comprend une portion d'extrémité borgne (406), et **en ce que** ledit bloc fixe (200) et ledit bloc mobile (300) dans une condition de contrainte mutuelle et avec lesdits premiers moyens de contrainte mécanique (401) dans ladite première position de commutation, lesdits deuxièmes moyens d'engagement et de contrainte (402) sont positionnés au niveau de ladite portion d'extrémité borgne (406).

13. Ensemble d'accouplement (100) selon l'une quelconque des revendications de 1 à 12, **caractérisé en ce que** ledit bloc fixe (200) comprend au moins un premier accouplement hydraulique (201) mâle ou femelle et peut ainsi constituer la partie terminale d'un premier circuit hydraulique d'une machine de travail principale.

14. Ensemble d'accouplement (100) selon la revendication 13, **caractérisé en ce que** ledit bloc mobile (300) comprend au moins un deuxième accouplement hydraulique (301) mâle ou femelle, respectivement, et est ainsi apte à constituer la partie d'extrémité d'un deuxième circuit hydraulique d'un appareil, et **en ce que** lesdits premier accouplement hydraulique (201) et deuxième accouplement hydraulique (301) sont aptes à être reliés de manière hydraulique de sorte à réaliser le raccordement hydraulique entre lesdits premier et deuxième circuits hydrauliques, respectivement, de ladite machine de travail principale et dudit équipement.

15. Ensemble d'accouplement (100) selon les revendications 13 et 14, **caractérisé en ce que** la commutation desdits premiers moyens de contrainte mécanique (401) dans ladite deuxième position se traduit également par la contrainte mécanique dudit bloc fixe (200) et dudit bloc mobile (300) et par le raccordement hydraulique entre ledit premier accouplement (201) et ledit deuxième accouplement (301) dudit bloc fixe (200) et dudit bloc mobile (300), respectivement.
